Europäisches Patentamt

European Patent Office

Office européen des brevets

(19)

(11) **EP 0 568 426 B1**

(12) # FASCICULE DE BREVET EUROPEEN

(45) Date de publication et mention
de la délivrance du brevet:
**21.08.1996 Bulletin 1996/34**

(51) Int Cl.6: **G01S 7/02**

(21) Numéro de dépôt: **93401058.8**

(22) Date de dépôt: **23.04.1993**

(54) **Procédé de détection et de localisation d'objets sur un sol relativement plan, et dispositif de mise en oeuvre**

Verfahren und Einrichtung zur Entdeckung und Ortung von Objekten auf einem relativ ebenen Boden

Method and device for detection and localisation of objects on a relatively level surface

(84) Etats contractants désignés:
**DE FR GB IT NL SE**

(30) Priorité: **30.04.1992 FR 9205370**

(43) Date de publication de la demande:
**03.11.1993 Bulletin 1993/44**

(73) Titulaire: **THOMSON-CSF**
**75008 Paris (FR)**

(72) Inventeurs:
- **Avignon, Bruno**
  **F-92402 Courbevoie Cédex (FR)**
- **Canal, Yves**
  **F-92402 Courbevoie Cédex (FR)**

(74) Mandataire: **Chaverneff, Vladimir et al**
**THOMSON-CSF**
**SCPI**
**B.P. 329**
**50, rue Jean-Pierre Timbaud**
**92402 Courbevoie Cédex (FR)**

(56) Documents cités:
**EP-A- 0 459 886**          **DE-A- 3 919 573**
**FR-A- 2 548 774**

- **PROCEEDINGS OF THE IEEE vol. 70, no. 12, Décembre 1982, NEW YORK, US pages 1410 - 1428 ULABY, F.T. 'Radar Signatures of Terrain: Useful Monitors of Renewable Resources.'**

EP 0 568 426 B1

## Description

La présente invention se rapporte à un procédé de détection et de localisation d'objets sur un sol relativement plan et à un dispositif de mise en oeuvre de ce procédé.

Pour détecter des objets tels que des véhicules ou des bâtiments sur un sol relativement plan, on peut soit procéder à un recalage photographique d'un terrain connu (dont on dispose d'images, sans ces objets, obtenues par satellite ou avion d'observation par exemple, auxquelles on compare des images ultérieures sur lesquelles on veut détecter de tels objets), soit procéder à une reconnaissance de formes sur des images actuelles.

Le premier procédé cité nécessite une reconnaissance préalable du terrain en question et un guidage très précis de l'aéronef d'observation (par exemple à l'aide de centrales inertielles). Outre le fait que la reconnaissance préalable n'est pas toujours possible et qu'elle doit précéder de peu de temps le passage de l'aéronef d'observation, sa mise en oeuvre exige des moyens de localisation onéreux (gyroscopes par exemple).

Le second procédé consiste à relever l'image du sol en temps réel et à la traiter à l'aide d'algorithmes de reconnaissance de formes pour en extraire les objets recherchés. Un tel procédé est complexe et nécessite des moyens de calcul très onéreux.

En outre, ces procédés connus ne mesurent pas la distance de l'aéronef à l'objet recherché, et ne permettent donc pas de prévoir l'instant de survol de l'objet par l'aéronef si les moyens de guidage de ce dernier doivent lui faire survoler l'objet en question.

La présente invention a pour objet un procédé de détection par un aéronef d'objets sur un sol relativement plan, qui soit simple à mettre en oeuvre, sans nécessiter de reconnaissance préalable ni de moyens de calcul importants, tout en permettant de localiser avec une bonne précision ces objets.

La présente invention a également pour objet un dispositif de mise en oeuvre de ce procédé, qui soit simple et peu onéreux et puisse être facilement implanté sur un aéronef.

Le procédé conforme à l'invention, pour la détection et la localisation d'objets environnés par une surface de sol sensiblement plane et présentant au moins une face sensiblement plane formant avec la surface plane un angle d'au moins environ 10°, à partir d'un engin passant au-dessus de la surface plane, consiste à balayer le sol en avant de l'engin par une onde électromagnétique, à analyser les fluctuations du signal réfléchi par la surface balayée, à sélectionner pour chaque incidence de l'onde de balayage une fourchette de valeurs de distances centrée sur une valeur égale à l'altitude de l'engin divisée par le cosinus de la valeur attendue de l'angle précité, à analyser dans cette fourchette de valeurs de distance la valeur de l'onde réfléchie par la surface balayée, et lorsque le maximum de la valeur de l'onde réfléchie dépasse un seuil déterminé, nettement supérieur à la valeur généralement mesurée de l'onde réfléchie par la surface environnante pour la même incidence de l'onde électromagnétique, à déterminer la distance à la face de réflexion et son azimut, correspondant au maximum mesuré.

La présente invention sera mieux comprise à la lecture de la description détaillée d'un mode de réalisation, pris à titre d'exemple non limitatif et illustré par le dessin annexé, sur lequel :

- la figure 1 est un schéma expliquant les fondements du procédé de l'invention ;
- la figure 2 est un ensemble de courbes représentant la réflectivité de terrains de natures différentes en fonction de l'angle d'incidence d'une onde radar;
- les figures 3 à 6 sont des schémas expliquant le procédé de l'invention ; et
- la figure 7 est un bloc diagramme d'un dispositif de mise en oeuvre du procédé de l'invention.

L'invention est décrite ci-dessous en référence à un mode de réalisation se rapportant à la localisation d'une cible par un aéronef qui est une munition volante telle qu'une bombe-cargo, en vue de corriger si nécessaire la trajectoire de cette munition afin qu'elle passe au plus près de la cible (guidage terminal), mais il est bien entendu que l'invention n'est pas limitée à une telle application, et qu'elle peut être mise en oeuvre pour une détection seule aussi bien que pour une détection et une localisation relativement précise. Il est également bien entendu que les "objets" à détecter et, le cas échéant à localiser, peuvent aussi bien être des reliefs particuliers du sol que des objets très divers posés et éventuellement fixés au sol, ou faisant saillie de ce sol, ou bien des surfaces en creux par rapport au sol environnant. La condition essentielle est que ces "objets" présentent au moins une face inclinée par rapport au sol environnant, et que l'objet (ou les objets) à localiser présente au moins une face pour laquelle une normale à cette face est dirigée vers le demi-espace se trouvant en avant (côté aéronef) d'un plan vertical perpendiculaire au plan de tangage de l'aéronef.

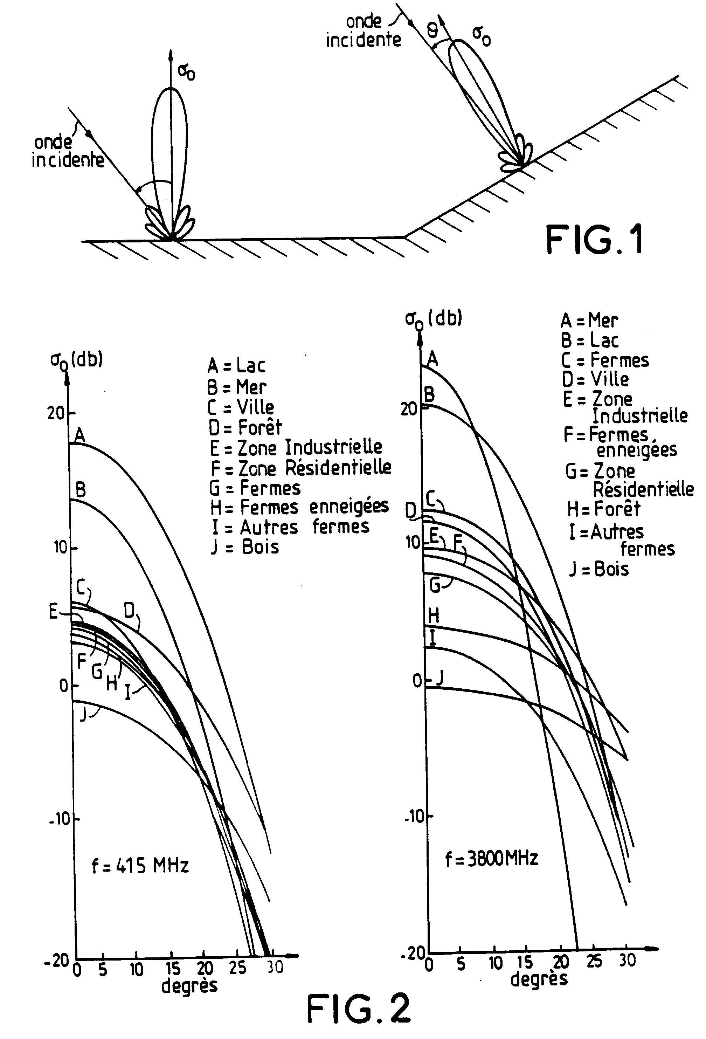

On a représenté en figure 1 des diagrammes de rétrodiffusion d'une onde radar sur un sol plan horizontal (à gauche) et sur un sol plan incliné (à droite), l'onde radar incidente étant inclinée par rapport à la verticale par exemple d'environ 35 à 45°. Dans le premier cas d'un sol plan horizontal, l'onde réfléchie par le sol présente un maximum important dans la direction de la verticale, et qui s'atténue très rapidement dès que l'on s'écarte de la verticale: on a le lobe principal, symétrique par rapport à la verticale. L'onde réfléchie présente également des lobes secondaires tels que les lobes d'un côté de la verticale, et leurs symétriques par rapport à la verticale. Ces lobes secondaires ont des maxima beaucoup plus faibles que le maximum du lobe principal. Si la mesure de l'onde réfléchie se fait dans la direction incidente, on recueille une valeur beaucoup plus faible que celle du maximum du lobe.

Dans le second cas représenté sur la droite de la figure 1, pour lequel le sol plan est incliné, par exemple de 30° par rapport à l'horizontale, on garde la même onde incidente (faisant un angle d'environ 35° à 45° avec la verticale, par exemple). Le diagramme de l'onde réfléchie a la même forme que celui du premier cas, mais il est symétrique par rapport à une direction θ qui est perpendiculaire à ce sol plan, et qui forme donc avec la verticale un angle égal à celui formé par le plan du sol avec l'horizontale (environ 30° pour l'exemple cité). Dans ce second cas, si la mesure se fait toujours dans la direction de l'onde incidente, on recueille une valeur assez proche du maximum du lobe principal, donc nettement supérieure à celle recueillie dans le premier cas.

Par conséquent, il est possible, à l'aide d'une onde électromagnétique de discriminer par rapport à un sol plan horizontal une surface inclinée par rapport à l'horizontale, la mesure se faisant de préférence dans la même direction que celle du rayonnement incident. L'angle optimum de mesure est celui qui permet le plus grand contraste entre le sol plan, et le plan incliné, il est généralement à mi-chemin entre O et l'angle d'incidence. La direction de rayonnement est la plus proche possible de l'angle formé entre la surface inclinée et un plan horizontal. Bien entendu, il est souhaitable de connaître ou d'avoir une idée assez précise de la valeur de cet angle afin de diriger de façon optimale l'onde incidente, et il faut que cet angle soit supérieur à un angle θmin en-dessous duquel la discrimination par rapport à une surface plane horizontale n'est plus possible, c'est-à-dire qu'alors l'amplitude de l'onde réfléchie par la surface inclinée est du même ordre de grandeur que celle réfléchie par une surface horizontale.

On a représenté en figure 2 deux ensembles de courbes montrant des variations du coefficient de rétrodiffusion $\sigma_o$ (en dB) sur le sol d'une onde radar en fonction de l'angle d'incidence θ. L'ensemble de gauche est relatif à une fréquence de 415 MHz et celui de droite à une fréquence de 3800 MHz. On voit d'après ces courbes que le niveau du signal réfléchi varie fortement en fonction de l'angle d'incidence de l'onde émise, et que, quel que soit le type de sol en cause, il est possible de discriminer un sol horizontal d'un sol suffisamment incliné (dans le cas le plus favorable $\vartheta$min peut être d'environ 10 à 15°).

On peut donc appliquer ce procédé à la détection d'objets présentant des faces ou facettes inclinées par rapport à une surface plane horizontale environnante. Par extension, on peut également détecter de tels objets se trouvant sur un sol plan mais non horizontal et dont au moins une des faces forme avec cette surface plane non horizontale un angle supérieur à $\vartheta$min, l'onde électromagnétique incidente étant la plus proche possible de la normale à cette face. $\vartheta$min est par exemple supérieur à environ 10°. Les "objets" en question peuvent aussi bien être en relief qu'en creux par rapport à la surface environnante.

L'angle d'incidence de l'onde radar doit être dans tous les cas le plus proche possible de la normale aux faces ou facettes de ces objets. Pour réaliser cette condition, la solution qui vient à l'esprit est d'agir sur la directivité du faisceau électromagnétique incident. Dans ce cas, la sensibilité relativement moyenne des dispositifs de traitement connus, et la grande précision de localisation requise imposent de produire un faisceau électromagnétique suffisamment focalisé pour que l'objet recherché représente une part non négligeable de la surface éclairée par ce faisceau. Cependant, les moyens permettant d'obtenir un faisceau fortement focalisé sont onéreux.

Pour diminuer ce coût, l'invention propose de ne traiter que les informations provenant de la zone de ladite normale aux faces ou facettes. A cet effet, on découpe la surface éclairée par le faisceau en cases d'analyse de distance dont la dimension est choisie du même ordre de grandeur que la dimension de l'objet à localiser. En pratique, de telles cases d'analyse sont obtenues soit à l'aide de zones de masquage lorsque le faisceau électromagnétique utilisé est optique, soit à l'aide du procédé connu en soi de résolution en distance dans le cas d'un faisceau radar.

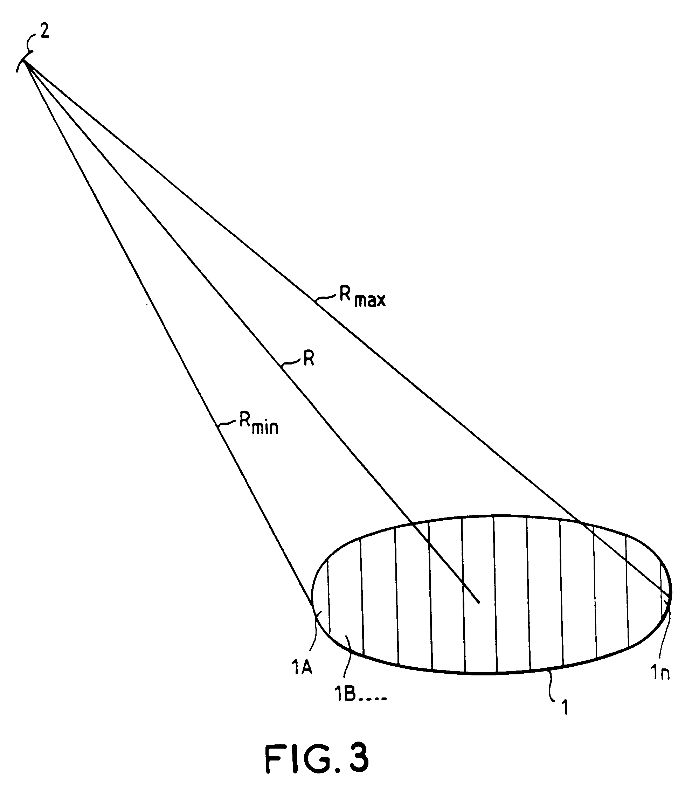

On a schématiquement représenté en figure 3 la formation au sol d'une tache 1 découpée en bandes appelées "cases distance" 1A ... 1n par un faisceau radar émis par une antenne 2. Dans le cas où le contour de l'objet a des dimensions de l'ordre de 10m x 10m, le nombre de ces cases peut par exemple être d'environ 5 à 10 ou plus et leur largeur d'environ 10 mètres. Dans le cas d'une antenne dont les diagrammes de directivité sont tels que décrits ci-dessous, la tache 1 a une forme elliptique et les bandes s'étendent perpendiculairement au grand axe de cette ellipse, ce grand axe pouvant être dans une première approche parallèle à la trajectoire de l'aéronef. La distance de l'antenne 2 à la case centrale est référencée R, et les distances de l'antenne aux extrémités de l'ellipse sont respectivement référencées Rmin pour l'extrémité la plus proche de l'antenne, et Rmax pour la plus éloignée, étant bien entendu que l'antenne 2 n'est pas à la verticale de la tache 1 (cette tache est formée en avant de l'aéronef pour le guider).

Pour caractériser plus finement l'objet à localiser, on peut, en outre, exploiter d'autres critères, par exemple le critère de texture, et ce, tout d'abord, en choisissant la longueur d'onde du faisceau utilisé. Ainsi, en optique, une longueur d'onde proche de l'infrarouge permet de caractériser un objet "chaud", tandis qu'avec un détecteur électromagnétique tel qu'un radar, c'est la rugosité de la surface éclairée par le faisceau qui est discriminante en fonction de la longueur d'onde : par exemple la bande X permet de séparer l'herbe de l'eau ou du béton.

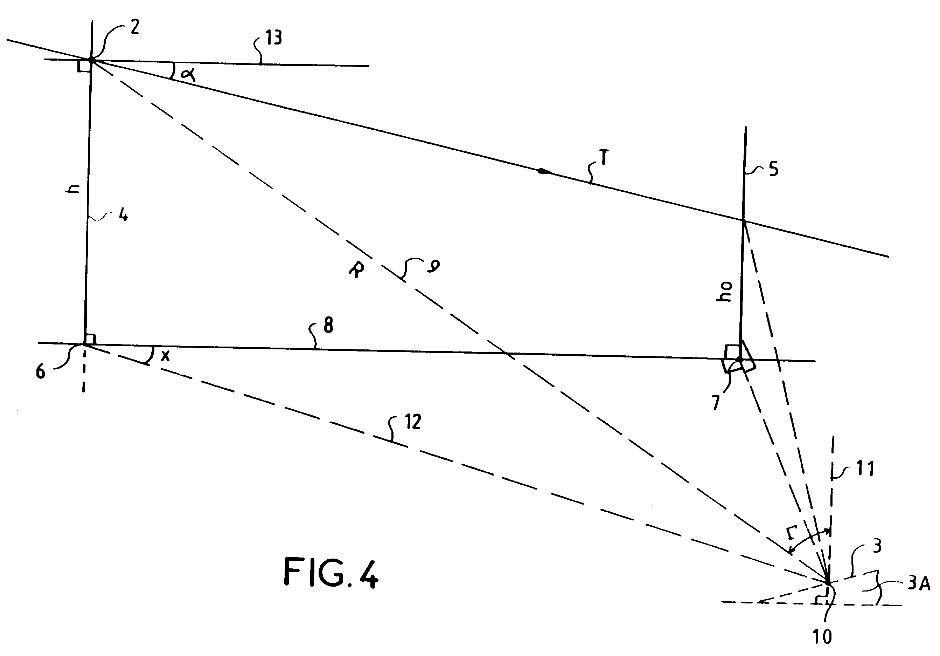

On va maintenant expliquer le procédé de localisation de l'invention en référence aux figures 4 à 6. Pour exploiter le critère d'inclinaison des faces ou facettes de l'objet à localiser, on analyse le sol sous une incidence, par rapport à la verticale, inférieure à 45° environ mais supérieure à 15° environ, en supposant que les faces inclinées de l'objet forment un angle d'au moins 10° et d'environ 40 à 50° au plus avec un plan horizontal. Comme on l'a mentionné ci-dessus en référence à la figure 2, la largeur du diagramme de rétrodiffusion de la plupart des sols connus garantit que le niveau du signal réfléchi par les surfaces inclinées formant avec un plan horizontal un angle compris dans les limites indiquées ci-dessus sera supérieur d'au moins 15 dB à celui réfléchi par les surfaces horizontales avoisinantes ayant au moins des dimensions du même ordre de grandeur que ces surfaces inclinées, la mesure du signal réfléchi se faisant avec l'antenne d'émission.

Afin que l'incidence du faisceau de localisation ait la valeur requise, quelle que soit la trajectoire de l'aéronef portant l'émetteur-récepteur radar, la directivité (angle d'ouverture du faisceau) de l'antenne 2 dans le plan de tangage (plan vertical contenant la trajectoire de l'aéronef) est avantageusement de l'ordre de 30° ou plus, mais sa directivité dans le plan de roulis est beaucoup plus importante, comme précisé ci-dessous. Sachant que, dans le cas où l'aéronef doit survoler au plus près l'objet à localiser, une anticipation d'au moins 500m est nécessaire pour permettre une correction efficace de trajectoire de cet aéronef, la surface 1 éclairée au sol a avantageusement une longueur (mesurée le long du grand axe de l'ellipse) d'au moins 250m dans ce cas. Cette surface 1 est découpée en bandes 1A ... 1n comme précisé ci-dessus en référence à la figure 3.

Pour que le dispositif de localisation puisse explorer la plus grande surface possible avec une antenne directive en roulis, cette antenne est avantageusement animée d'un mouvement de rotation (roulis) autour de l'axe longitudinal de l'aéronef qui la porte. Dans le cas où cet aéronef est une bombe cargo, il suffit d'animer ce cargo d'un mouvement de rotation autour de son propre axe longitudinal. On procède alors à l'analyse temporelle de la fluctuation de l'écho réfléchi par le sol et l'objet à localiser lors du déplacement latéral de la tache éclairée, déplacement dû à la rotation en roulis du faisceau directif de l'antenne.

Le procédé de l'invention fait appel à la mesure en continu de l'altitude de l'aéronef porteur du dispositif émetteur-récepteur de mesure. La connaissance de cette altitude permet de ne traiter, comme expliqué ci-dessous, que la partie du diagramme, vue dans la direction de tangage de l'aéronef, correspondant à la réflectivité spécifique de l'objet à localiser.

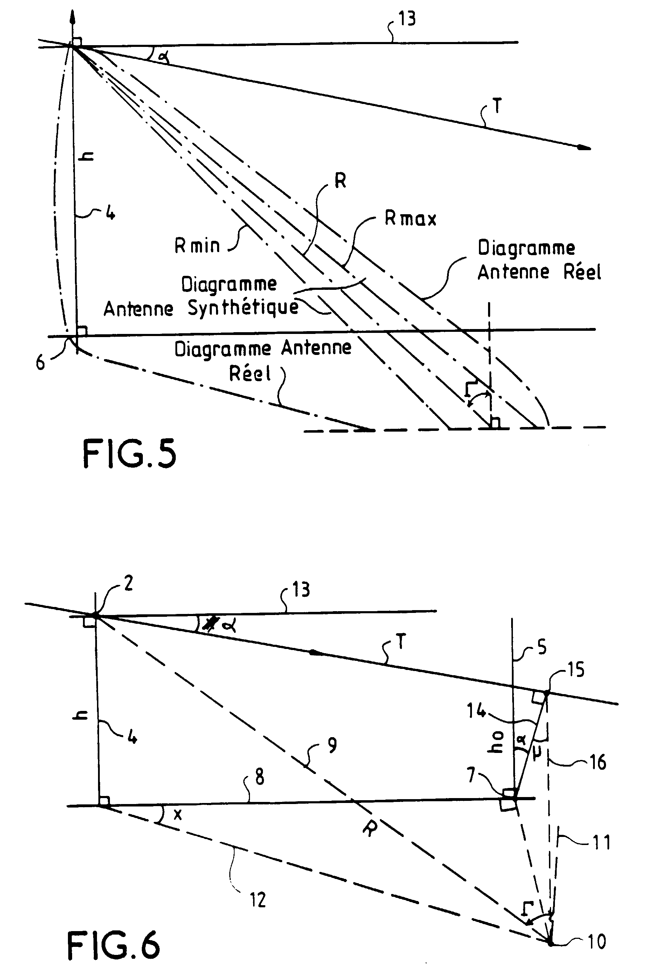

Sur la figure 4, on a représenté très schématiquement l'antenne 2 (dans le plan du dessin) et une face 3 (inclinée d'environ 30°, par exemple, par rapport à un plan horizontal) d'un objet 3A se trouvant en avant du plan du dessin (vers l'observateur du dessin). Sur cette figure, de même que sur les figures 5 et 6, les éléments qui se trouvent dans le plan du dessin sont représentés en traits continus, alors que les éléments qui ne se trouvent pas dans ce plan sont en traits interrompus. La direction de la trajectoire T actuelle (pour la position représentée de l'antenne 2) de l'aéronef portant l'antenne 2 est représentée dans le plan du dessin. Les verticales passant par l'antenne 2 (supposée ponctuelle) à un instant t quelconque avant le passage au plus près de l'objet 3A, et passant par l'antenne lorsque celle-ci est au plus près de l'objet 3A (en supposant qu'elle poursuive la trajectoire T) sont respectivement référencées 4 et 5. Ces deux verticales sont également dans le plan du dessin. On appelle h l'altitude de l'antenne 2 mesurée sur la verticale 4, et ho son altitude mesurée sur la verticale 5. La droite joignant les pieds 6, 7 des verticales 4 et 5 est référencée 8. On appelle R la distance (mesurée sur une droite 9) de l'antenne 2 au centre 10 de la face 3; 11 la verticale passant par le point 10, 12 la droite joignant les points 6 et 10, $\Gamma$ l'angle formé par les droites 9 et 11, 13 une droite horizontale passant par l'antenne 2 et parallèle à la droite 8, et $\alpha$ l'angle formé par T et 13.

Comme précisé ci-dessus, la tache elliptique formée au sol par l'antenne 2 peut avoir une longueur sur son grand axe de 250 m par exemple à une distance R d'environ 500 m, mais, selon l'invention, on n'en analyse que la partie centrale, par exemple sur une longueur de 50 m, le restant étant éliminé par un filtrage de distance.

L'antenne 2 ayant mesuré l'altitude h, concentre sa surveillance sur une plage de distances (Rmin à Rmax, comme indiqué en référence à la figure 3) définie par :

Rmin surveillé = 0,95 . h mesuré/cos ($\Gamma$ attendu)
Rmax surveillé = 1,05 . h mesuré/cos ($\Gamma$ attendu).

Les coefficients 0,95 et 1,05 proviennent de la sélection des 50 m pour R = 500 m, ($\Gamma$ attendu) est la valeur estimée de $\Gamma$ en supposant que l'on ait pu acquérir auparavant une idée de la forme de l'objet à localiser. On réalise ainsi un diagramme "d'antenne synthétique" (entre Rmin et Rmax).

On a repris en figure 5 certains éléments de la figure 4, qui sont affectés des mêmes références, sans l'objet 3A. On y a représenté en trait mixte le diagramme réel d'antenne en tangage, qui permet de mesurer à la fois h et R. L'angle d'ouverture de ce diagramme (à -3dB) peut par exemple être d'environ 45°.

L'angle d'ouverture de ce diagramme en roulis (perpendiculairement à la trajectoire) est avantageusement d'environ 3° pour un contraste moyen d'environ 15 dB entre sol horizontal et sol incliné à 30° environ. Une directivité moins bonne diminue le taux de contraste jusqu'à environ 9 dB, ce qui peut être quand même acceptable.

Compte tenu de la relativement forte directivité de l'antenne en roulis (3° comme cité ci-dessus), il faut lui faire subir un balayage rotatif pour couvrir l'intégralité de la zone où est susceptible de se trouver l'objet 3A. On suppose que la trajectoire de l'aéronef n'est pas choisie au hasard, ni nécessairement choisie pour passer à la verticale de l'objet, mais que l'on a au moins une connaissance approximative de l'emplacement de l'objet à localiser. Dans le cas où l'on n'aurait aucune idée de cet emplacement, au lieu d'augmenter l'angle d'ouverture du faisceau électromagnétique et/ou l'altitude de l'aéronef, il est préférable, dans les applications où cela est possible, de faire explorer par l'aéronef des bandes parallèles adjacentes de terrain. Si l'on fait subir au dispositif de localisation une rotation autour de l'axe de l'aéronef, il est préférable de le munir de plusieurs antennes réparties à la périphérie d'un support rotatif, afin d'utiliser les temps morts pendant lesquels une antenne éclaire le ciel. Selon une variante, une antenne unique peut effectuer en va-et-vient des mouvements angulaires limités pour ne pas éclairer le ciel. Selon encore une autre variante, on utilise une antenne à balayage électronique en roulis.

On va expliquer en référence à la figure 6 la façon de calculer l'azimut de l'objet à localiser, par exemple en vue de corriger la trajectoire de l'aéronef pour qu'il puisse passer à la verticale de cet objet. Sur cette figure 6, les mêmes éléments que ceux des figures 4 et 5 sont affectés des mêmes références.

Sur la figure 6, on appelle x l'angle formé par les droites 8 et 12. La perpendiculaire 14 menée du point 7 sur la trajectoire T la coupe en un point référencé 15. La droite passant par 10 et 15 est référencée 16. Par construction, l'angle formé entre les droites 5 et 14 est égal à $\alpha$ (c'est-à-dire l'angle formé par 13 et T).

L'angle formé entre les droites 14 et 16 est référencé $\mu$. C'est l'angle de roulis du faisceau de l'antenne 2 lorsque le centre de ce faisceau coïncide avec le point 10. Sa valeur peut être fournie par des capteurs angulaires solidaires de l'antenne 2. Ces capteurs peuvent par exemple être du type à contacts mouillés au mercure ; on en dispose dans ce cas dans différentes positions angulaires un nombre suffisant pour obtenir la résolution angulaire désirée.

On peut écrire :

$$\sin(x) = \tan(\mu) \, . \, \cos(\alpha) \, . \, [ \, \cotan(\Gamma) - \cos(x) \, . \, \tan(\alpha)]$$

Pour déterminer $\alpha$, on se sert de la mesure de l'altitude ho de la trajectoire T au plus près de l'objet 3A. On a alors :

$$\tan(\alpha) = \tan(\Gamma) \, . \, (1 - \frac{ho}{h}) , \, \text{d'où :}$$

$$\sin(x) = \tan(\mu). \frac{\cotan(\Gamma) - \cos(x) \, . \, \tan(\Gamma) \, . \, (1 - ho/h)}{\left[ 1 + \{ \tan(\Gamma) \, . \, (1 - ho/h) \}^2 \right]^{1/2}}$$

Si x et $\mu$ sont très petits, et si on fixe a priori $\Gamma$ à 45° (avec une tolérance de $\pm$ 5° résultant de la fixation des limites Rmin et Rmax comme précisé ci-dessus) on peut simplifier cette dernière formule ainsi :

$$x = \mu \cdot \left( 2\frac{h^2}{ho^2} - 2 \cdot \frac{h}{ho} + 1 \right)^{-1/2}$$

avec :

$$\frac{h}{ho} = \frac{\tan(\Gamma)}{\tan(\Gamma) - \tan(\alpha)}$$

Cette dernière formule montre que lorsque $\alpha$ varie de 20° à 40°, le rapport h/ho varie de 1,5 à 5. Du fait que l'on ne connaît pas ho, il faut l'évaluer a priori. On remarquera cependant qu'une erreur de $\pm$ 50% sur ho reste d'un effet limité sur la valeur de x, compte tenu de la forte variation de h/ho en fonction de $\alpha$.

En pratique, dans le cas d'une bombe cargo pour laquelle on fixe ho à 300 mètres par exemple, on peut calculer l'angle x avec la formule suivante :

$$x = \mu \cdot \left( \frac{h^2}{45000} - \frac{h}{150} + 1 \right)^{-1/2}$$

formule dans laquelle les distances sont mesurées en mètres.

Typiquement, l'erreur sur la détermination de l'angle x de correction latérale de la trajectoire due à cette approximation sur ho ($\mu$ et h étant déterminés avec une précision suffisante) est inférieure à $\pm$ 0,8°. On notera que la précision de la mesure de h n'influe pas sur l'évaluation de $\Gamma$, car la distance R est sensiblement proportionnelle à h.

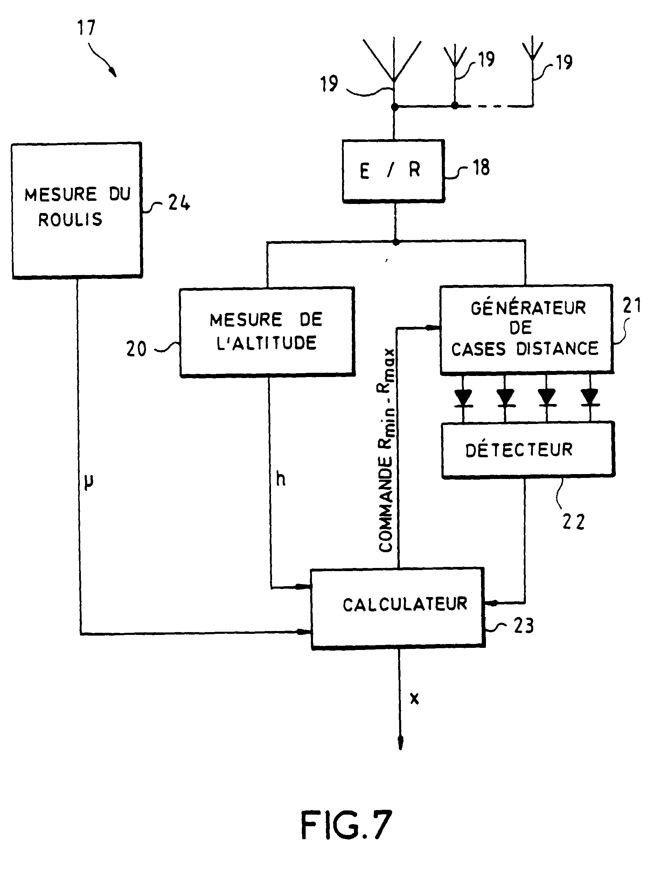

On a représenté en figure 7 le bloc diagramme d'un exemple de réalisation d'un dispositif 17 de mise en oeuvre du procédé décrit ci-dessus.

Le dispositif 17 comporte un émetteur-récepteur 18 relié à une ou plusieurs antennes 19 (plusieurs antennes dans le cas d'un support d'antenne rotatif, si l'on désire que le sol soit constamment exploré par une antenne, comme précisé ci-dessus).

L'antenne unique, ou chaque antenne, a, de préférence, dans le plan de tangage de l'aéronef porteur, un diagramme large tel que celui illustré en figure 5, afin d'éclairer le sol à la verticale et avec une incidence proche de $\Gamma$. Dans le plan de roulis de l'aéronef porteur, le diagramme de l'antenne (ou de chaque antenne) a, de préférence, un angle d'ouverture inférieur à 9°.

L'émetteur-récepteur 18 est relié à un dispositif 20 de mesure d'altitude et à un dispositif 21 générateur de "cases distance" connu en soi, déterminant des valeurs de distances comprises entre Rmin et Rmax (voir figure 3). Le générateur 21 est relié par un détecteur 22 à un calculateur 23 auquel est relié par ailleurs le dispositif 20. Un dispositif 24 de mesure d'angle de roulis $\mu$ (par exemple du type à plusieurs contacts mouillés au mercure disposés en étoile en différentes positions angulaires de roulis, comme mentionné ci-dessus) est relié au calculateur 23. Ce calculateur 23 peut être relativement simple, puisqu'il n'est chargé que de calculer l'angle x selon la formule simplifiée ci-dessus. La sortie du calculateur, fournissant x, est reliée à un dispositif (non représenté) de correction de trajectoire de l'aéronef. Le détecteur 22 fonctionne, de façon connue en soi, par intégration et seuillage. S'il détecte un signal supérieur à un seuil déterminé (par exemple seuil fixé à 15 dB au-dessus de la valeur moyenne du signal recueilli pour différents sols horizontaux), il l'interprète directement comme dû à la présence d'une face inclinée par rapport à un plan horizontal, donc d'un objet à localiser. Le calculateur 23 est également relié au générateur 21 afin de lui faire asservir la fourchette de valeurs Rmin - Rmax à l'altitude de l'aéronef

Dans le cas où l'aéronef porteur est une bombe cargo, la détection d'un signal dépassant le seuil précité est censée correspondre à la cible à détruire (hangar ou avion sur un terrain d'aviation) et la détermination de x permet de corriger la trajectoire de ce porteur pour qu'il passe au plus près de cette cible, étant bien entendu qu'avant le lancement de cette bombe cargo on a une idée de la topologie des lieux, c'est-à-dire qu'il y a tout lieu de supposer que le terrain survolé par l'aéronef est pratiquement plan et horizontal et qu'une surface inclinée suffisamment grande pour réfléchir un signal détecté par le détecteur 22 fait presque à coup sûr partie de la cible recherchée. Il est également bien entendu que l'aéronef est lancé avec une assez bonne précision vers la cible, par exemple pour que sa trajectoire initiale passe à moins de 500 m de la cible, le dispositif de l'invention assurant le guidage final vers cette cible. On remarquera qu'il est inutile de mesurer R, puisque sa valeur découle du critère même de détection (angle $\Gamma$) et de la mesure de h.

## Revendications

1. Procédé de détection et de localisation d'objets environnés par une surface de sol sensiblement plane et présentant au moins une face sensiblement plane formant avec la surface plane un angle d'au moins 10° environ, à partir d'un engin passant au-dessus de la surface plane, caractérisé par le fait qu'il consiste à balayer le sol en avant de l'engin par une onde électromagnétique, à analyser les fluctuations du signal réfléchi par la surface balayée, à sélectionner pour chaque incidence de l'onde de balayage une fourchette de valeurs de distances centrée sur une valeur égale à l'altitude (h) de l'engin par rapport à la surface plane, divisée par le cosinus de la valeur attendue de l'angle précité, à analyser dans cette fourchette de valeurs de distance la valeur de l'onde réfléchie par la surface balayée, et lorsque le maximum de la valeur de l'onde réfléchie dépasse un seuil déterminé, nettement supérieur à la valeur généralement mesurée de l'onde réfléchie par la surface environnante pour la même incidence de l'onde électromagnétique, à déterminer la distance à la face de réflexion et son azimut, correspondant au maximum mesuré.

2. Procédé selon la revendication 1, caractérisé par le fait que la surface sensiblement plane est un sol plan.

3. Procédé selon la revendication 1 ou 2, caractérisé par le fait que l'onde électromagnétique sert également à mesurer l'altitude de l'engin au-dessus de la surface plane.

4. Procédé selon la revendication 1 ou 2, caractérisé par le fait que l'onde électromagnétique est une onde radar dont la directivité en tangage est d'au moins environ 45° et d'environ 9° au maximum en roulis.

5. Procédé selon la revendication 4, caractérisé par le fait que la fourchette de valeurs de distance est obtenue par formation de "cases distance", cette fourchette étant asservie à l'altitude de l'engin.

6. Procédé selon l'une des revendications précédentes, caractérisé par le fait que ledit seuil déterminé est supérieur d'au moins environ 9 dB à la valeur mesurée de l'onde réfléchie par la surface environnante.

7. Dispositif de détection et de localisation d'objets environnés par une surface sensiblement plane et présentant une face sensiblement plane formant avec la surface plane un angle d'au moins environ 10°, ce dispositif étant fixé sur un aéronef passant au-dessus de la surface plane, caractérisé par le fait qu'il comporte un dispositif d'émission-réception radar (18) relié à au moins une antenne (19), à un dispositif de mesure d'altitude (20) et à un générateur de cases distance (21) relié par un dispositif détecteur à seuil (22) à un calculateur (23), ce calculateur étant relié au dispositif de mesure d'altitude, à un dispositif de mesure de roulis de l'aéronef (24) et à une entrée de commande de valeurs minimale et maximale de cases distance du générateur de cases de distance pour produire des cases distance sur la base de l'altitude de l'engin et de l'angle précité.

8. Dispositif selon la revendication 7, caractérisé par le fait que l'antenne est fixée sur un dispositif mobile en roulis autour de la trajectoire de l'aéronef.

9. Dispositif selon l'une des revendications 7 ou 8, caractérisé par le fait que le dispositif de mesure de roulis comporte plusieurs contacteurs à mercure disposés selon différentes orientations angulaires en roulis.

10. Dispositif selon l'une des revendications 7 à 9, caractérisé par le fait que l'antenne a une directivité inférieure à environ 9° en roulis, et une directivité d'environ 45° en tangage lui permettant de mesurer l'altitude de l'aéronef.

11. Dispositif selon l'une des revendications 7 à 10, implanté sur une munition volante, telle qu'une bombe cargo, tournant autour de son propre axe, caractérisé par le fait que l'antenne est fixée sur cette munition et tourne(nt) avec elle.


**Patentansprüche**

1. Verfahren zur Erfassung und Ortung von Objekten, die von einem im wesentlichen ebenen Gelände umgeben sind und mindestens eine im wesentlichen ebene Seite besitzen, die mit dem ebenen Gelände einen Winkel von mindestens etwa 10° einschließt, wobei die Erfassung durch ein Gerät erfolgt, das sich über der ebenen Fläche bewegt, dadurch gekennzeichnet, daß das Verfahren darin besteht, den Boden vor dem Gerät mit einer elektromagnetischen Welle zu überstreichen, die Schwankungen des von der überstrichenen Oberfläche reflektierten Signals zu analysieren, für jeden Einfallswinkel der Welle einen Wertebereich von Abständen auszuwählen, der auf einen Wert gleich der Höhe (h) des Geräts bezüglich der ebenen Fläche geteilt durch den Kosinus des erwarteten Werts des erwähnten Winkels zentriert ist, in diesem Bereich von Entfernungswerten die Intensität der von der überstrichenen Oberfläche reflektierten Welle zu analysieren und, wenn der höchste Wert der reflektierten Welle einen bestimmten Schwellwert überschreitet, der deutlich über dem im allgemeinen gemessenen Wert der von dem umgebenden Gelände reflektierten Welle für den gleichen Einfallswinkel der elektromagnetischen Welle liegt, den Abstand zur Reflexionsseite des Objekts und dessen Azimut entsprechend dem gemessenen Maximalwert zu bestimmen.

2. Verfahren nach Anspruch 1, dadurch gekennzeichnet, daß das im wesentlichen ebene Gelände ein ebenes Gelände ist.

3. Verfahren nach Anspruch 1 oder 2, dadurch gekennzeichnet, daß die elektromagnetische Welle auch zur Messung der Höhe des Geräts oberhalb des ebenen Geländes dient.

4. Verfahren nach Anspruch 1 oder 2, dadurch gekennzeichnet, daß die elektromagnetische Welle eine Radarwelle ist, deren Richtwirkung in der Nickebene mindestens etwa 45° und in der Rollebene höchstens etwa 9° beträgt.

5. Verfahren nach Anspruch 4, dadurch gekennzeichnet, daß der Bereich der Entfernungswerte durch Bildung von Entfernungsfächern erhalten wird und gemäß der Höhe des Geräts nachgeregelt wird.

6. Verfahren nach einem der vorhergehenden Ansprüche, dadurch gekennzeichnet, daß die bestimmte Schwelle um mindestens etwa 9 dB größer als der Wert ist, der gemessen wird, wenn die Welle vom umgebenden Gelände reflektiert wird.

7. Vorrichtung zur Erfassung und Ortung von Objekten, die von einem im wesentlichen ebenen Gelände umgeben sind und eine im wesentlichen ebene Seite besitzen, die mit dem ebenen Gelände einen Winkel von mindestens etwa 10° einschließt, wobei die Vorrichtung auf einem Flugkörper fixiert ist, der über die ebene Fläche fliegt, dadurch gekennzeichnet, daß sie eine Radarvorrichtung (18) mit Sender und Empfänger aufweist, die mindestens mit einer Antenne (19), einer Höhenmeßvorrichtung (20) und einer Vorrichtung zur Erzeugung von Entfernungsfächern (21) verbunden ist, die über eine Schwellwert-Detektorvorrichtung (22) an einen Rechner (23) angeschlossen ist, wobei der Rechner mit der Höhenmeßvorrichtung, einer Vorrichtung zur Messung des Rollwinkels des Flugkörpers (24) und einem Steuereingang für die Mindest- und Höchstwerte der Entfernungsfächer der Vorrichtung zur Erzeugung von Entfernungsfächern verbunden ist, um Entfernungsfächer auf der Basis der Höhe des Flugkörpers und des erwähnten Winkels zu bilden.

8. Vorrichtung nach Anspruch 7, dadurch gekennzeichnet, daß die Antenne auf einer Vorrichtung fixiert ist, die in Rollrichtung um die Flugbahn des Flugkörpers beweglich ist.

9. Vorrichtung nach einem der Ansprüche 7 oder 8, dadurch gekennzeichnet, daß die Meßvorrichtung für den Rollwinkel mehrere Quecksilberkontaktgeber enthält, die gemäß unterschiedlichen Winkelstellungen in Rollrichtung angeordnet sind.

10. Vorrichtung nach einem der Ansprüche 7 bis 9, dadurch gekennzeichnet, daß die Antenne in der Rollebene eine Richtwirkung von weniger als etwa 9° und in der Nickebene von etwa 45° besitzt, so daß die Höhe des Flugkörpers gemessen werden kann.

11. Vorrichtung nach einem der Ansprüche 7 bis 10, die auf einem fliegenden Waffenträger wie z.B. einem Bombenträger montiert ist, der um seine eigene Achse dreht, dadurch gekennzeichnet, daß die Antenne auf diesem Waffenträger befestigt ist und mit ihm rotiert.

## Claims

1. Method of detecting and of locating objects surrounded by a substantially flat ground surface and having at least one substantially flat face forming an angle of at least about 10° with the flat surface, from a vehicle passing above the flat surface, characterized in that it consists in scanning the ground in front of the vehicle with an electromagnetic wave, in analysing the fluctuations in the signal reflected by the scanned surface, in selecting, for each incidence of the scanning wave, a bracket of range values centred on a value equal to the altitude (H) of the vehicle with respect to the flat surface, divided by the cosine of the expected value of the abovementioned angle, in analysing the value of the wave reflected by the scanned surface, in this bracket of range values, and, when the maximum of the value of the reflected wave exceeds a defined threshold markedly higher than the generally measured value of the wave reflected by the surrounding surface for the same incidence of the electromagnetic wave, in determining the range to the reflection face and its azimuth, corresponding to the measured maximum.

2. Method according to Claim 1, characterized in that the substantially flat surface is flat ground.

3. Method according to Claim 1 or 2, characterized in that the electromagnetic wave also serves to measure the altitude of the vehicle above the flat surface.

4. Method according to Claim 1 or 2, characterized in that the electromagnetic wave is a radar wave the directional characteristic of which in pitch is at least about 45° and is about 9° at most in roll.

5. Method according to Claim 4, characterized in that the bracket of range values is obtained by forming "range cells", this bracket being slaved to the altitude of the vehicle.

6. Method according to one of the preceding claims, characterized in that the said defined threshold is at least about 9 dB above the measured value of the wave reflected by the surrounding surface.

7. Device for detecting and locating objects surrounded by a substantially flat surface and having one substantially flat face forming an angle of at least about 10° with the flat surface, this device being fixed to an aircraft passing above the flat surface, characterized in that it includes a radar transmission/reception device (18) linked to at least one antenna (19), to an altitude measuring device (20) and to a range cell generator (21) linked by a threshold-detector device (22) to a computer (23), this computer being linked to the altitude measuring device, to a device for measuring the roll of the aircraft (24) and to a range cell minimum- and maximum-value control input of the range cell generator in order to produce range cells on the basis of the altitude of the vehicle and of the abovementioned angle.

8. Device according to Claim 7, characterized in that the antenna is fixed to a device which is movable in roll about the trajectory of the aircraft.

9. Device according to one of Claims 7 and 8, characterized in that the roll measuring device includes several mercury switches arranged with different angular orientations in roll.

10. Device according to one of Claims 7 to 9, characterized in that the antenna has a directional characteristic of less than about 9° in roll, and a directional characteristic of about 45° in pitch allowing it to measure the altitude of the aircraft.

11. Device according to one of Claims 7 to 10, installed on a flying weapon, such as an air-carried bomb, rotating about its own axis, characterized in that the antenna is fixed to this weapon and rotates with it.

FIG.1

FIG.2

FIG.3

FIG.4

**FIG.5**

**FIG.6**

17

19

19 19

MESURE DU ROULIS — 24

E / R — 18

MESURE DE L'ALTITUDE

20

GÉNÉRATEUR DE CASES DISTANCE — 21

DÉTECTEUR

22

COMMANDE $R_{min}$ - $R_{max}$

μ

h

CALCULATEUR

— 23

x

# FIG.7